# EUROPÄISCHE PATENTSCHRIFT

(11) **EP 1 918 576 B1**
(45) Veröffentlichungstag und Bekanntmachung des Hinweises auf die Patenterteilung: **07.06.2017**
(21) Anmeldenummer: 07115364.7
(22) Anmeldetag: 31.08.2007
(51) Int. Cl.: B01D 35/02, F02M 61/16, B01D 29/00, B01D 29/33

(54) **Kraftstofffilter**
Fuel filter
Filtre à carburant

(30) Priorität: 30.10.2006 DE 102006051203
(43) Veröffentlichungstag der Anmeldung: 07.05.2008
(73) Patentinhaber: ROBERT BOSCH GMBH, 70442 Stuttgart (DE)
(72) Erfinder: Hanneke, Juergen, 70499, Stuttgart (DE); Ferraro, Giovanni, 71642, Ludwigsburg (DE); Schilling, Arzu, 76356, Weingarten (DE)

(56) Entgegenhaltungen:
- EP-A- 1 621 765
- WO-A-2006/049598
- US-A- 4 806 248
- US-A1- 2004 108 264
- US-B1- 6 338 797

## Beschreibung

### Stand der Technik

In Kraftstoffeinspritzanlagen sind häufig sogenannte Stabfilter vorhanden, die dazu dienen, feste Partikel aus dem Kraftstoffherauszufiltern und dadurch Schäden und Funktionsstörungen an den Düsennadeln und anderen Bauteilen der Injektoren zu verhindern. Diese Stabfilter sind an sich sehr wirkungsvoll, jedoch können dünne und längliche Partikel relativ einfach durch die Stabfilter gelangen und die Spritzlöcher der Injektoren verstopfen.

US 2004/0108264 A1 offenbart den Oberbegriff des Anspruchs 1. Es zeigt ein scheibenförmiges Filterelement bei dem mehrere Scheiben übereinander gestapelt sind und die Scheiben an ihren Stirnseiten Vorsprünge 74 aufweisen, die als Abstandshalter in axialer Richtung zwischen den übereinander gestapelten Scheiben dienen. Dadurch ergibt sich ein langer schmaler Spalt, der dazu dienen soll, Verunreinigungen aus einer Flüssigkeit herauszufiltern.

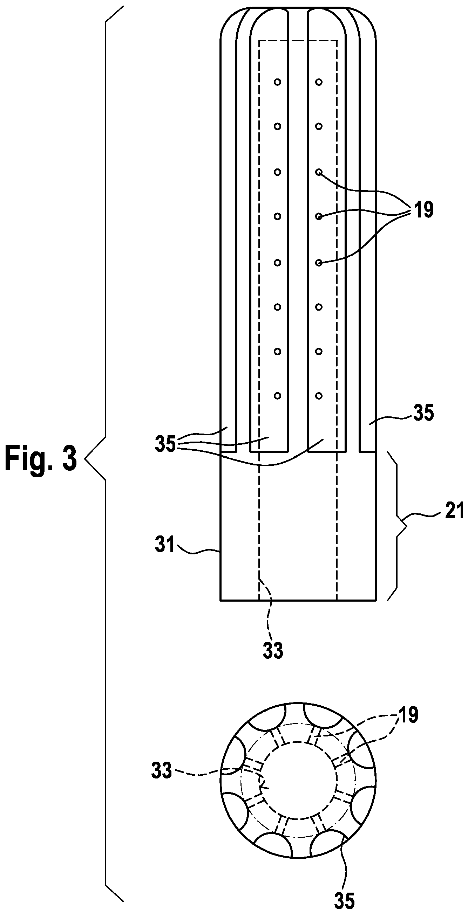

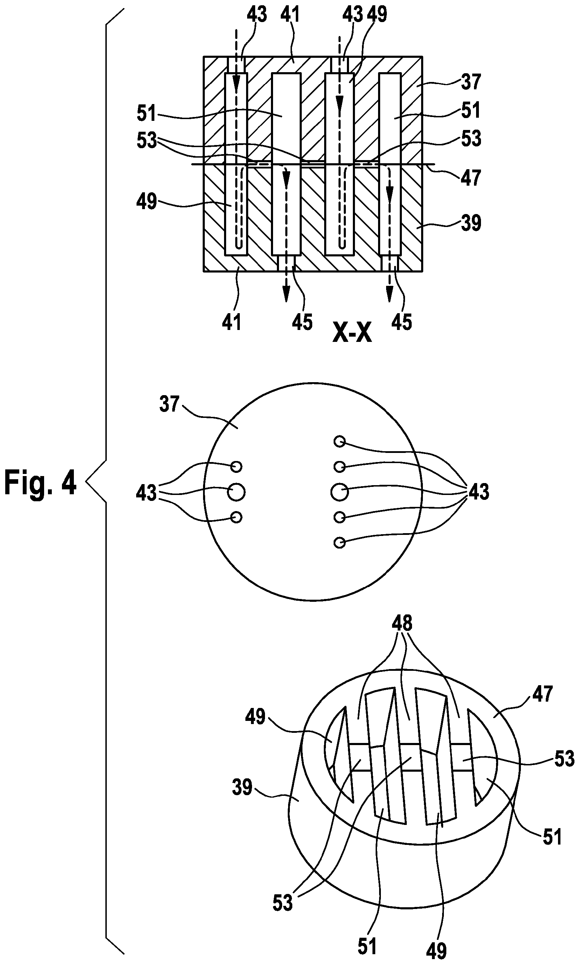

Die WO2006/049598 A1 beschreibt verschiedene Filterelemente, wobei in dem ersten Ausführungsbeispiel gemäß Figuren 3 und 4 zwischen einem Einlass 104 und einem Auslass 108 ein langgezogener Spalt 116 gebildet wird, der radial außen von der Wand einer Hochdruckleitung 102 begrenzt wird und radial innen von dem Filterelement bzw. den Rippen 114 eines Filterelements gebildet wird. Durch diesen langen Spalt können jedoch auch längliche Partikel hindurchgelangen.

Aus der Figur 5 der WO2006/049598 A1 ist ein Filterelement mit einem am stromabwärts angeordneten Ende verschlossenen Filtersack (blind sack) bekannt. Dabei wird ersichtlich davon ausgegangen wird, dass langen nadelförmigen Partikel in die Bohrungen 210 des Filtersacks gelangen können und dort im Laufe der Zeit abbrechen.

### Offenbarung der Erfindung

Der Erfindung liegt die Aufgabe zugrunde, Kraftstofffilter bereitzustellen, deren Wirksamkeit gegenüber den herkömmlichen Stabfiltem weiter verbessert ist.

Diese Aufgabe wird erfindungsgemäß gelöst durch ein Filterelement für eine Kraftstoffeinspritzanlage mit einer stromaufwärts angeordneten ersten Sacklochbohrung, mit einer stromabwärts angeordneten zweiten Sacklochbohrung, mit einer Aussparung an einem Außendurchmesser des Filterelements, wobei zwischen der ersten Sacklochbohrung und der Aussparung erste Filterbohrungen vorhanden sind, und wobei zwischen der Aussparung und der zweiten Sacklochbohrung zweite Filterbohrungen vorhanden sind.

Bei dieser Ausführungsform eines erfindungsgemäßen Kraftstofffilters gelangt der zu filternde Kraftstoff in die erste Sacklochbohrung, der gleichzeitig als erste Spänesammelraum dient, wird umgelenkt und durch die ersten Filterbohrungen gefiltert. Wegen der Umlenkung der Strömungsrichtung des Kraftstoffs von der Sacklochbohrung in die ersten Filterbohrungen werden Partikel aller Art zuverlässig aus dem Kraftstoff gefiltert und in der ersten Sacklochbohrung gesammelt. Dies gilt auch und besonders für längliche Filterpartikel, deren Länge selbstverständlich größer sein muss als ein Durchmesser der ersten Filterbohrungen.

Diejenigen Partikel, welche die ersten Filterbohrungen passieren konnten, werden anschließend in der zweiten Aussparung, die zusammen mit einer Aufnahmebohrung für das Filterelement einen zweiten Spänesammelraum begrenzt, erneut gefiltert, da zwischen der Aussparung und der zweiten Sacklochbohrung zweite Filterbohrungen vorhanden sind. Der zu filternde Kraftstoff verlässt das Filterelement durch die zweite Sacklochbohrung.

Auch hier wird der Kraftstoffstrom erneut stark umgelenkt, so dass auch in der zweiten Filterstufe insbesondere längliche Partikel in dem zweiten Spänesammelraum zurückgehalten und somit der Kraftstoff wirksam gefiltert wird.

Je nach Bedarf, können beide Längsachsen des Filterelements und die Längsachsen der ersten Filterbohrungen und/oder der zweiten Filterbohrungen einen Winkel zwischen 30° und 150° einschließen. Selbstverständlich ist es, wenn eine Vielzahl von Filterbohrungen vorhanden ist, auch möglich, dass verschiedene Filterbohrungen verschiedene Winkel mit der Längsachse des Filterelements einschließen.

Um die Montage des erfindungsgemäßen Filterelements zu erleichtern, hat es sich als vorteilhaft erwiesen, dass ein im eingebauten Zustand des Filterelements stromabwärts der Aussparung angeordneter Abschnitt des Filterelements als Führungsabschnitt ausgebildet ist, und dass ein im eingebauten Zustand des Filterelements stromaufwärts der Aussparung angeordneter Dichtabschnitt des Filterelements einen Presssitz mit einer Aufnahmebohrung für das Filterelement bildet. Der Presssitz sorgt naturgemäß dafür, dass das Filterelement in der Aufnahmebohrung fixiert wird. Zusätzlich stellt der Presssitz auch sicher, dass kein Kraftstoff ungefiltert an dem Filterelement vorbeiströmen kann, so dass sämtlicher Kraftstoff, der durch die Aufnahmebohrung strömt, das Filterelement passieren muss und somit gefiltert wird.

Presssitz mit einer Aufnahmebohrung für das Filterelement bildet, mit einem in eingebautem Zustand des Filterelements stromaufwärts des Dichtabschnitts angeordneten Filterabschnitt, und mit einer Sacklochbohrung, welche sich über den Filterabschnitt und den Dichtabschnitt erstreckt, wobei zwischen dem Filterabschnitt und der Sacklochbohrung erste Filterbohrungen vorhanden sind.

Auch bei diesem Ausführungsbeispiel eines erfindungsgemäßen Filterelements begrenzen eine Aufnahmebohrung für das Filterelement und der Filterabschnitt des Filterelements einen ersten Spänesammelraum. Außerdem erzwingen die ersten Filterbohrungen eine Umlenkung der Strömungsrichtung des zu filternden Kraftstoffs. Dies rührt daher, dass der erfindungsgemäß ausgebildete erste Spänesammelraum eine zylinderförmige Geometrie hat und der zu filternde Kraftstoff zunächst in Längsrichtung des zylinderförmigen ersten Spänesammelraums strömt. Anschließend wird der Kraftstoff rechtwinklig oder in einem Winkelbereich zwischen 30° und 180° umgelenkt, so dass insbesondere längliche und dünne Partikel dieser Änderung der Bewegungsrichtung nicht folgen können und in Folge dessen sehr effektiv in dem ersten Spänesammelraum zurückgehalten werden.

Um zu erreichen, dass die länglichen Partikel den ersten Spänesammelraum auch erreichen und nicht vor dem Filterelement in der Aufnahmebohrung hängen bleiben, kann vorteilhafterweise vorgesehen sein, dass an einem stromaufwärts des Filterabschnitts angeordneten Außendurchmesser des Filterelements mindestens eine Leitnut vorgesehen ist. Diese Leitnut bietet den länglichen Partikeln und selbstverständlich auch anderen im Kraftstoff befindlichen Partikeln die Möglichkeit, in den ersten Spänesammelraum zu gelangen, wo sie aufgrund ihrer Geometrie und der Geometrie des Spänesammelraums zurückgehalten werden.

Die Wirksamkeit des erfindungsgemäßen Filterelements kann weiter erhöht werden, indem in die Sacklochbohrung ein Innenfilter eingesetzt wird, wobei der Innenfilter im eingebauten Zustand im Bereich des Dichtabschnitts flüssigkeitsdicht in der Sacklochbohrung aufgenommen ist, wobei der Innenfilter und die Sacklochbohrung einen zweiten Spänesammelraum begrenzen, wobei der Innenfilter als einseitig offener Hohlkörper ausgebildet ist, und wobei zwischen dem zweiten Spänesammelraum und einem Innenraum des Filters zweite Filterbohrungen vorgesehen sind.

Dadurch wird eine zweistufige Filterung erreicht und es können Partikel in dem Kraftstoff, welche die ersten Filterbohrungen passieren konnten, an den zweiten Filterbohrungen zurückgehalten werden, so dass sie im zweiten Spänesammelraum verbleiben. Dieser Effekt kann dadurch unterstützt werden, dass die ersten Filterbohrungen einen etwas größeren Durchmesser als die zweiten Filterbohrungen aufweisen. Diese konstruktive Maßnahme kann bei allen Ausführungsformen erfindungsgemäßer Filterelemente eingesetzt werden.

Die eingangs genannte Aufgabe wird ebenfalls bei einem Filterelement mit einer ersten topfförmigen Filterscheibe und mit einer zweiten topfförmigen Filterscheibe dadurch gelöst, dass die erste topfförmige Filterscheibe und die zweite topfförmige Filterscheibe einen Innenraum begrenzen, wenn sie so angeordnet werden, dass sich ihre offenen Enden an einer Kontaktfläche berühren, wobei der Innenraum durch mindestens eine Trennwand in mindestens eine erste Kammer und eine zweite Kammer unterteilt wird, dass an einem Boden der ersten topfförmigen Filterscheibe mindestens eine Bohrung vorgesehen ist, die in mindestens eine erste Kammer mündet, dass an einem Boden der zweiten topfförmigen Filterscheibe mindestens eine Bohrung vorgesehen ist, die in mindestens eine zweite Kammer mündet, dass an dem offenen Ende der ersten topfförmigen Filterscheibe und/oder der zweiten topfförmigen Filterscheibe in der mindestens einen Trennwand im Bereich der Kontaktfläche mindestens eine hydraulische Verbindung zwischen der mindestens einen ersten Kammer und der mindestens einen zweiten Kammer hergestellt wird.

Bei diesem Filterelement ist die hydraulische Verbindung zwischen der mindestens einen ersten Kammer und der mindestens einen zweiten Kammer im Bereich der Kontaktfläche zwischen den beiden Filterscheiben angeordnet, so dass sich die hydraulische Verbindung im Wesentlichen in der Mitte zwischen den Böden der ersten topfförmigen Filterscheibe und den Böden der zweiten topfförmigen Filterscheibe befindet. Dadurch ist es erstens sehr gut möglich, Partikel in der ersten Kammer zu sammeln und andererseits ist es für Partikel, die sich in der ersten Kammer befinden, nahezu unmöglich, die schmale hydraulische Verbindung zwischen der mindestens einen ersten Kammer und der mindestens einen zweiten Kammer zu erreichen. Dies gilt insbesondere für längliche Partikel, da diese Partikel die Nut nur dann passieren könnten, wenn sie sich erstens genau in der Ebene, die durch die Kontaktfläche zwischen erster Filterscheibe und zweiter Filterschreibe gebildet wird, befinden und außerdem der Durchmesser der länglichen Partikel nicht größer ist als die Tiefe der Nut. Da diese Randbedingungen bei einem durchströmten erfindungsgemäßen Filterelement nur sehr schwer einzuhalten sind, ist die Filterwirkung des erfindungsgemäßen Filterelements sehr hoch.

Selbstverständlich ist es auch möglich, mehrere Trennwände in den Filterscheiben vorzusehen, wobei sich dadurch mehrere erste Kammern und zweite Kammern bilden. Auch können mehrere Nuten, welche eine hydraulische Verbindung zwischen den ersten Kammern und den zweiten Kammern herstellen, vorgesehen sein. Durch diese Maßnahmen wird die Filterwirkung und die Unempfindlichkeit des Filterelements gegenüber Verschmutzungen oder Partikeln, welche eine oder mehrere der hydraulischen Verbindungen zusetzen, erhöht.

Des Weiteren ist es möglich, mehrere dieser Paare von ersten topfförmigen Filterscheiben und zweiten topfförmigen Filterscheiben in Reihe zu schalten, so dass das Volumen der Spänesammelraum, welches letztendlich durch die Volumina der mindestens der ersten Kammern vorgegeben ist, erhöht wird. Außerdem steigt durch die Reihenschaltung mehrerer erfindungsgemäßer Filterelemente naturgemäß die Filterwirkung.

Um eine hydraulische Verbindung zwischen den ersten Bohrungen der stromabwärts gelegenen Paare von Filterscheiben mit den zweiten Bohrungen der stromaufwärts angeordneten Filterscheiben zu erreichen, kann weiter vorgesehen sein, dass an den Böden der ersten topfförmigen Filterscheiben und/oder den Böden der zweiten topfförmigen Filterscheiben Vertiefungen vorhanden sind, welche eine hydraulische Verbindung zwischen den in Reihe angeordneten Paaren von Filterscheiben herstellen.

Die eingangs genannte Aufgabe wird ebenfalls gelöst bei einem Filterelement umfassend mindestens eine erste Filterscheibe mit einer zentralen Durchgangsbohrung und mit mindestens einer zweiten Filterscheibe mit einer außermittig angeordneten Durchgangsbohrung, wobei an mindestens einer Stirnseite der zweiten Filterscheibe ein Spänesammelraum angeordnet ist, und wobei die zentrale Durchgangsbohrung der ersten Filterscheibe in den Spänesammelraum münden.

Bei dieser Anordnung ist der zu reinigende Kraftstoff ebenfalls gezwungen, mehrere Richtungswechsel vorzunehmen, so dass bei Gelegenheit dieser Richtungswechsel insbesondere lange dünne Partikel gut ausgefiltert und abgefangen werden können.

Dazu ist es hilfreich, wenn die außermittig angeordnete Durchgangsbohrung der zweiten Filterscheibe und der Spänesammelraum durch eine Nut hydraulisch miteinander verbunden sind. Die Abmessungen der Nut können so gewählt werden, dass einerseits ausreichend kleine Partikel zurückgehalten werden und andererseits auch die Nut nicht verstopft wird, wenn einer oder wenige Partikel in dem Spänesammelraum am Beginn der Nut zurückgehalten werden.

Um auf einfache Weise zu gewährleisten, dass die aus Paaren von Filterscheiben oder aus mehreren Filterscheiben bestehenden Filterelemente immer in richtiger relativer Lage zueinander sich befinden, ist eine Verdrehsicherung vorzusehen. Dies kann auf einfache Weise dadurch erfolgen, dass die Filterscheiben in einer Hülse aufgenommen sind, wobei die Filterscheiben eine Längsnut aufweisen, und wobei die Hülse eine Innenbohrung aufweist, in der eine mit der Längsnut der Filterscheiben zusammenwirkende Längsrippe vorhanden ist.

Es hat sich in vielen Fällen als vorteilhaft erwiesen, wenn ein Durchmesser der ersten Filterbohrungen größer als ein Durchmesser der zweiten Filterbohrungen ist. Dadurch können schrittweise Partikel verschiedener Größe aus dem Kraftstoff herausgefiltert werden, ohne dass die Gefahr des Zusetzens des Filterelements besteht.

Aus fertigungs- und montagetechnischer Sicht ist es vorteilhaft, wenn die Filterelemente eine zylindrische Außenkontur aufweisen. Dann können sie nämlich in eine Aufnahmebohrung mit kreisrundem Querschnitt ohne weiteres eingesetzt bzw. eingepresst werden. Dabei werden die Herstellungskosten sowohl der Filterelemente als auch der Aufnahmebohrung minimiert.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen Merkmale können sowohl einzeln als auch in beliebiger Kombination miteinander erfindungswesentlich sein.

### Kurze Beschreibung der Zeichnungen

Es zeigen:
Figur 1 ein erstes Ausführungsbeispiel eines erfindungsgemäßen Filterelements im Teillängsschnitt,
Figur 2 ein zweites Ausführungsbeispiel eines erfindungsgemäßen Filterelements im Längsschnitt,
Figur 3 ein Ausführungsbeispiel eines erfindungsgemäßen Innenfilters,
Figur 4 ein drittes Ausführungsbeispiel eines erfindungsgemäßen Filterelements in verschiedenen Ansichten,
Figur 5 mehrere in Reihe geschaltete Filterelemente gemäß dem dritten Ausführungsbeispiel und
Figur 6 ein viertes Ausführungsbeispiel eines erfindungsgemäßen Filterelements in verschiedenen Ansichten.

### Ausführungsformen der Erfindung

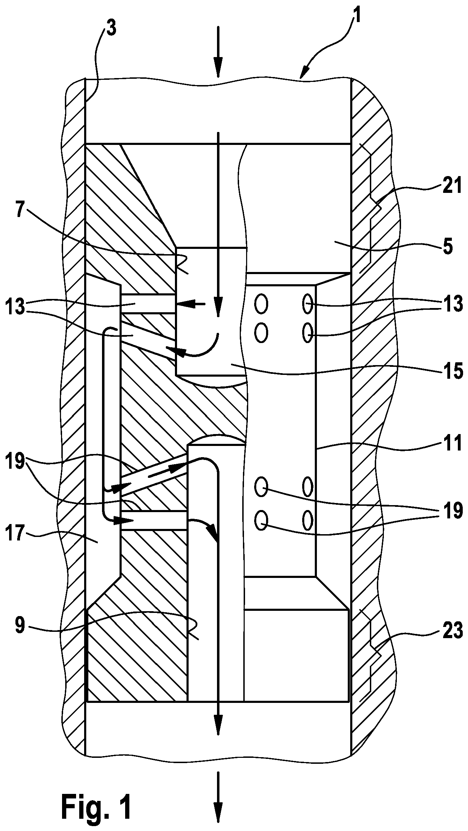

In Figur 1 ist ein erstes Ausführungsbeispiel eines erfindungsgemäßen Filterelements 1 im Teillängsschnitt dargestellt. Das Filterelement 1 ist eine Aufnahmebohrung 3, die beispielsweise Teil eines Injektorgehäuses einer Kraftstoffeinspritzanlage sein kann, aufgenommen. Der nicht dargestellte Kraftstoff fließt in Richtung der Pfeile (ohne Bezugszeichen) durch das Filterelement 1, wird dabei gefiltert und strömt anschließend weiter durch die Aufnahmebohrung 3. Das erfindungsgemäße Filterelement 1 besteht aus einem zylindrischen Filterkörper 5, in dem eine erste Sacklochbohrung 7 und eine zweite Sacklochbohrung 9 angeordnet sind. Zwischen der ersten Sacklochbohrung 7 und der zweiten Sacklochbohrung 9 besteht keine direkte hydraulische Verbindung.

Etwa in der Mitte des zylindrischen Filterkörpers 5 ist außen eine Aussparung 11 vorgesehen, die bei dem in Figur 1 dargestellten Ausführungsbeispiel als umlaufende Ringnut ausgebildet ist. Es ist jedoch auch möglich, die Aussparung 11 als Abflachung, beispielsweise durch Fräsen, herzustellen.

Zwischen der ersten Sacklochbohrung 7 und der Aussparung 11 wird eine hydraulische Verbindung durch erste Filterbohrungen 13 hergestellt.

Ein Durchmesser D₁ der ersten Filterbohrungen 13 ist so gewählt, dass größere Partikel, die sich in dem nicht dargestellten Kraftstoff befinden, die ersten Filterbohrungen 1 nicht passieren können und somit in der ersten Sacklochbohrung 7 zurückgehalten werden. Dadurch erhält die erste Sacklochbohrung 7 die Funktion eines ersten Spänesammelraums. Der durch die erste Sacklochbohrung 7 gebildete erste Spänesammelraum ist in Figur 1 mit dem Bezugszeichen 15 versehen.

Anhand der Pfeile, welche die Strömungsrichtung des zu filternden Kraftstoffs andeuten, wird deutlich, dass der Kraftstoff beim Übergang von der ersten Sacklochbohrung 7 in die ersten Filterbohrungen 13 eine Richtungsänderung von 90° oder mehr vornehmen muss.

Es hat sich gezeigt, dass die Partikel, welche häufig aus Metallabrieb oder anderen Feststoffen bestehen und deren spezifisches Gewicht deutlich höher ist als das von Kraftstoff, dieser Richtungsumlenkung aufgrund ihrer größeren Trägheitskräfte nicht folgen können und sich infolge dessen am Grund der ersten Sacklochbohrung absetzen.

Dies gilt insbesondere für längliche dünne Partikel, die sich in der Regel mit ihrer Längsachse parallel zur Strömungsrichtung des Kraftstoffs ausrichten, solange der Kraftstoff in Richtung der Längsachse der Aufnahmebohrung 3 bzw. der ersten Sacklochbohrung 7 strömt. Der plötzlichen Richtungsumkehr in Richtung der ersten Filterbohrungen 13 können diese Partikel in der Regel nicht folgen.

Wenn der zu reinigende Kraftstoff die ersten Filterbohrungen 13 passiert hat, gelangt er in den von der Aussparung 11 und der Aufnahmebohrung 3 begrenzten zylindrischen zweiten Spänesammelraum 17.

Zwischen dem zweiten Spänesammelraum 17 und der zweiten Sacklochbohrung 9 wird eine hydraulische Verbindung durch zweite Filterbohrungen 19 hergestellt. Auch hier findet wieder eine starke Umlenkung der Strömungsrichtung des zu filternden Kraftstoffs statt, wie durch die Pfeile (ohne Bezugszeichen) leicht zu erkennen ist.

Durch die starke Umlenkung der Strömungsrichtung des zu reinigenden Kraftstoffs im zweiten Spänesammelraum 17 findet auch hier vor dem Eintritt des Kraftstoffs in die zweiten Filterbohrungen 19 eine Separierung der noch im Kraftstoff enthaltenen Partikel statt, die im zweiten Spänesammelraum 17 verbleiben.

Ein im Bereich der ersten Sacklochbohrung 7 angeordneter Dichtabschnitt 21 bildet einen Presssitz mit der Aufnahmebohrung und verhindert dadurch, dass ungefilterter Kraftstoff an dem Filterelement 1 vorbeiströmen kann. Es muss vielmehr aller Kraftstoff, der die Aufnahmebohrung 3 in Richtung der Pfeile durchströmt, durch die erste Sacklochbohrung 7 strömen und wird in der zuvor beschriebenen Weise gefiltert.

An dem stromabwärts gelegenen Ende des Filterkörpers 5 ist ein Führungsabschnitt 23 vorgesehen, welcher einerseits zur Führung des Filterkörpers 5 dient, wenn dieser in Figur 1 von oben in die Aufnahmebohrung 3 hineingeführt und im Bereich des Dichtabschnitts 21 mit dieser verpresst wird. Dabei ist darauf zu achten, dass der Spalt zwischen dem Durchmesser des Filterkörpers 5 im Bereich des Führungsabschnitts 23 und der Aufnahmebohrung 3 so klein ist, dass keine Partikel, die sich in dem zweiten Spänesammelraum 17 gesammelt haben, durch diesen Spalt in den stromabwärts des Filterelements 1 befindlichen Teil der Aufnahmebohrung 3 gelangen können.

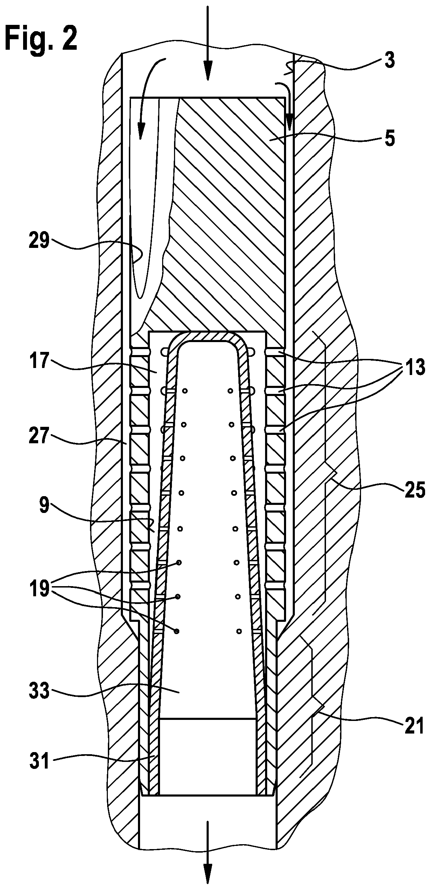

In Figur 2 ist ein weiteres Ausführungsbeispiel eines erfindungsgemäßen Filterelements dargestellt. Gleiche Bauteile werden mit gleichen Bezugszeichen versehen und es gilt das bezüglich Figur 1 Gesagte entsprechend.

Bei diesem Ausführungsbeispiel ist der Filterkörper 5 gestuft ausgeführt. In dem stromabwärts angeordneten Teil des Filterkörpers 5 ist ein Dichtabschnitt 21 ausgebildet. In diesem Dichtabschnitt bilden der Filterkörper 5 und die Aufnahmebohrung 3 einen Presssitz.

Stromaufwärts des Dichtabschnitts 21 ist ein Filterabschnitt 25 ausgebildet. Mit Ausnahme des Dichtabschnitts 21 ist zwischen der Aufnahmebohrung 3 und dem Filterkörper 5 ein zylindrischer Ringspalt 27 ausgebildet, durch den Kraftstoff von der Aufnahmebohrung 3 in den Filterabschnitt 25 strömen kann. Damit sowohl der Kraftstoff als auch die im Kraftstoff enthaltenen Partikel ohne weiteres in den Ringspalt 27 gelangen, sind an dem stromaufwärts des Filterkörpers 5 angeordneten Ende des Filterkörpers 5 eine oder mehrere Leitnuten 29 in den Filterkörper 5 eingearbeitet. Die Leitnuten weisen an dem stromaufwärts des Filterkörpers 5 angeordneten Ende einen relativ großen Querschnitt auf, wobei der Querschnitt in Strömungsrichtung langsam abnimmt. Dadurch werden auch längliche Partikel in den Ringspalt 27 geleitet und gelangen bis in den Bereich des Filterabschnitts 25. Im Bereich des Filterabschnitts 25 sind mehrere Reihen von über den Umfang verteilten ersten Filterbohrungen 13 in dem Filterkörper 5 angeordnet. Diese ersten Filterbohrungen sind radial zur Längsachse des Filterkörpers 5 angeordnet, so dass eine Umlenkung der Strömungsrichtung des zu filternden Kraftstoffs und der darin enthaltenen Partikel von etwa 90° erforderlich ist. Diese Umlenkung kann der zu filternde Kraftstoff ohne weiteres mitmachen, während insbesondere längliche Partikel dieser Umlenkung nicht folgen können und somit in dem unteren Teil des Ringspaltes 27 zurückgehalten werden. Somit dient insbesondere der untere Teil des Ringspalts 27 als erster Spänesammelraum 15. Im Inneren des Filterkörpers 5 ist eine stromabwärts offene zweite Sacklochbohrung 9 vorhanden. In diese zweite Sacklochbohrung 9 ist ein einseitig offener Innenfilter 31 eingepresst. Der Innenfilter 31 bildet im Bereich des Dichtabschnitts 21 einen Presssitz mit dem Filterkörper 5 aus. In dem oberhalb des Dichtabschnitts 21 liegenden Teil der zweiten Sacklochbohrung 9 begrenzen die zweite Sacklochbohrung 9 und der Innenfilter 31 einen zweiten Spänesammelraum 17. In diesem oberhalb des Dichtabschnitts gelegenen Teil des Innenfilters 31 sind in dem Innenfilter 31 eine Vielzahl von zweiten Filterbohrungen 19 vorhanden. Wenn nun Kraftstoff aus dem zweiten Spänesammelraum 17 in einen Innenraum 33 des Innenfilters 31 strömen will, muss er die zweiten Filterbohrungen 19 passieren. Dabei werden weitere noch im Kraftstoff enthaltene Partikel herausgefiltert und verbleiben im zweiten Spänesammelraum 17.

In Figur 3 ist ein weiteres Ausführungsbeispiel eines erfindungsgemäßen Innenfilters 31 dargestellt. Bei diesem Ausführungsbeispiel hat der Innenfilter 31 eine zylindrische Grundform, in die oberhalb des Dichtabschnitts 21 mehrere über den Umfang verteilte Längsrillen ausgebildet sind. Die zweiten Filterbohrungen 19 verbinden die Längsrillen 35 mit dem Innenraum 33 des Innenfilters 31.

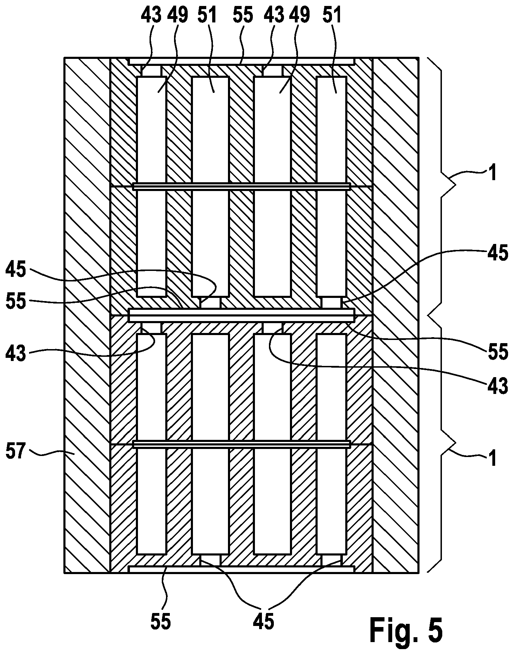

In den Figuren 4 und 5 wird ein drittes Ausführungsbeispiel eines erfindungsgemäßen Filterelements 1 in verschiedenen Ansichten dargestellt.

Bei diesem Ausführungsbeispiel ist mindestens ein Paar von Filterscheiben, bestehend aus einer ersten topfförmigen Filterscheibe 37 und einer zweiten topfförmigen Filterscheibe 39. In vielen Ausführungsformen ist es möglich, die erste topfförmige Filterscheibe 37 und die zweite topfförmige Filterscheibe 39 baugleich auszuführen. Die erste topfförmige Filterscheibe 37 und die zweite topfförmige Filterscheibe 39 weisen jeweils einen Boden 41 auf. In dem Boden 41 der ersten topfförmigen Filterscheibe 37 sind erste Bohrungen 43 vorhanden, während im Boden 41 der zweiten topfförmigen Filterscheibe 39 zweite Bohrungen 45 vorgesehen sind. Die erste topfförmige Filterscheibe 37 und die zweite topfförmige Filterscheibe 39 werden so aufeinander gesetzt, dass die Böden 41 voneinander an den entgegengesetzten Enden angeordnet sind und die offenen Enden (ohne Bezugszeichen) der topfförmigen Filterscheiben 37 und 39 sich im Bereich einer Kontaktfläche 47 berühren.

Im rechten unteren Teil der Figur 4 ist eine isometrische Darstellung einer zweiten topfförmigen Filterscheibe 39 abgebildet, anhand derer sich die Geometrie der Filterscheiben 37 und 39 näher erläutern lässt. Der Innenraum der topfförmigen Filterscheiben 37 und 39 ist durch Trennwände 47 in zwei erste Kammern 49 und zwei zweite Kammern 51 unterteilt. Im Bereich der Kontaktfläche 47 ist in den Trennwänden 48 mindestens eine Nut 53 vorhanden. Die Nut 53 stellt eine hydraulische Verbindung zwischen den ersten Kammern 49 und den zweiten Kammern 51 dar. Wie aus dem Querschnitt gemäß Figur 4 ersichtlich, münden die ersten Bohrungen 43 in die ersten Kammern 49, während die zweiten Bohrungen 45 in die zweiten Kammern 51 münden.

Wenn nun das erfindungsgemäße Filterelement 1, bestehend aus den topfförmigen Filterscheiben 37 und 39, in eine nicht dargestellte Aufnahmebohrung eingesetzt wird, strömt der zu reinigende Kraftstoff über die ersten Bohrungen 43 in die ersten Kammern 41 entsprechend den im oberen Teil von Figur 4 dargestellten Pfeilen (ohne Bezugszeichen). Dabei dienen die Nuten 53 zum Filtern des Kraftstoffs, was insbesondere dadurch gut möglich ist, da erstens der Kraftstoff wieder stark umgelenkt werden muss, wenn er aus der Hauptströmungsrichtung parallel zur Längsachse der ersten Bohrungen 43 umgelenkt wird, bevor er durch die Nuten 53 strömt. In diesem Fall ist eine Umlenkung von etwa 90° erforderlich. Da die Partikel und insbesondere die länglichen Partikel, welche sich in dem noch ungefilterten Kraftstoff befinden, diese Umlenkung nicht mitmachen, setzen sie sich am unteren Teil der ersten Kammern 49 ab. Lediglich gefilterter Kraftstoff bzw. Kraftstoff ohne Partikel kann durch die Nuten 53 in die zweiten Kammern 51 gelangen. Von dort gelangt der gefilterte Kraftstoff über die zweiten Bohrungen 45 aus dem Filterelement heraus.

Es ist offensichtlich, dass entweder nur in den zweiten topfförmigen Filterscheiben 39 eine oder mehrere Nuten 53 eingebracht werden können oder, falls gewünscht, ebenfalls in den ersten topfförmigen Filterscheiben 37 Nuten 53 eingebracht werden können, wie dies in Figur 4 dargestellt ist.

Bei Bedarf können auch mehrere der erfindungsgemäßen Filterelemente 1 in Reihe geschaltet werden. Ein solches Ausführungsbeispiel ist in Figur 5 geschnitten dargestellt. Damit der aus den zweiten Bohrungen 45 des weiter stromaufwärts angeordneten ersten Filterelements 1 austretende Kraftstoff in die ersten Bohrungen 43 des stromabwärts davon angeordneten zweiten Filterelements 1 eintreten kann, ist an den Böden der ersten und/oder der zweiten topfförmigen Filterscheiben 37 und 39 jeweils eine Vertiefung 55 vorgesehen.

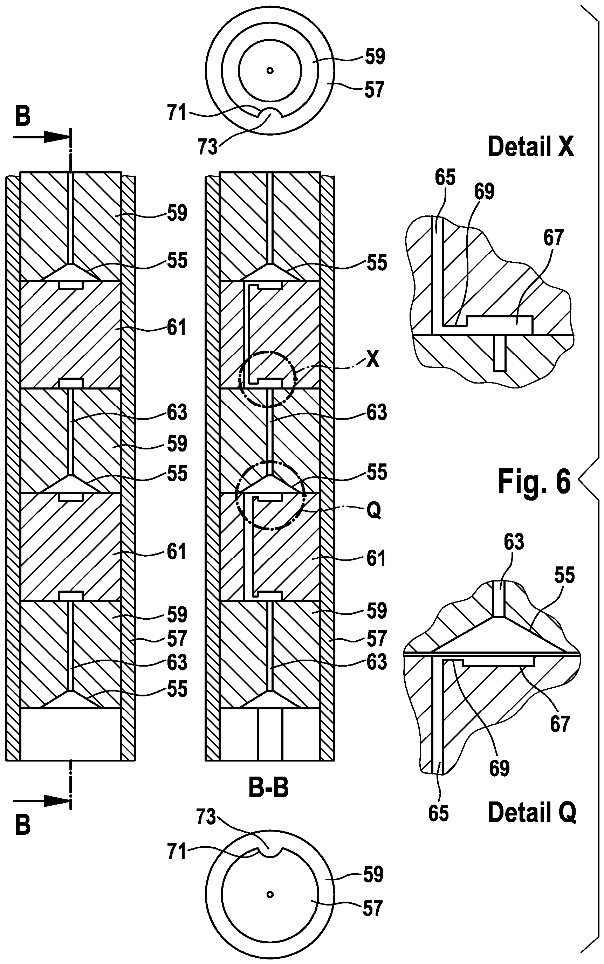

Die beiden Filterelemente 1 sind in einer Hülse 57 angeordnet, welche die verschiedenen Bauteile (37, 39) zusammenhält.
Bei dem vierten Ausführungsbeispiel, welches in Figur 6 in verschiedenen Ansichten dargestellt ist, sind erste Filterscheiben 59 vorhanden, die eine zentrale Durchgangsbohrung 63 aufweisen. Die zweiten Filterscheiben 61 weisen eine außermittig angeordnete Durchgangsbohrung 65 auf.

An einer oder beiden Stirnseiten der zweiten Filterscheiben 61 ist jeweils eine Filterkammer 67 ausgebildet. In die Filterkammer 67 mündet die zentrale Durchgangsbohrung 63 der darunter bzw. darüber liegenden ersten Filterscheibe 59. Eine Nut 69 stellt die hydraulische Verbindung zwischen den Filterkammern 67 und den zu der gleichen zweiten Filterscheibe 61 gehörenden außermittigen Durchgangsbohrungen 65 her.

Bei dem in Figur 6 dargestellten Ausführungsbeispiel werden die Filterscheiben 59 und 61 von unten nach oben durchströmt.

Der zu reinigende Kraftstoff strömt zunächst durch eine zentrale Durchgangsbohrung 63 einer ersten Filterscheibe 59. Anschließend gelangt der zu reinigende Kraftstoff in die Filterkammer 67 der darüber liegenden zweiten Filterscheibe 61.

Um in die außermittige Durchgangsbohrung 65 der gleichen zweiten Filterscheibe 61 zu gelangen, muss der zu reinigende Kraftstoff seine Strömungsrichtung ändern und durch die Nut 69 strömen. Dabei werden Partikel aus dem Kraftstoff abgeschieden und in der Filterkammer 67 zurückgehalten. Durch ein mehrfaches Durchströmen der ersten Filterscheiben 59 und zweiten Filterscheiben 61 im Wechsel erfolgt eine stufenweise Reinigung des Kraftstoffs von darin enthaltenen Partikeln.

In Figur 6 sind eine Ansicht von unten sowie eine Ansicht von oben des erfindungsgemäßen Filterelements, welches in einer Hülse 57 aufgenommen ist, dargestellt. Dabei wird deutlich, dass die Filterscheiben 59 und 61 eine Längsnut 71 aufweisen, die mit einer Längsrippe 73 in der Hülse 57 zusammenwirkt, so dass die Filterscheiben 59 und 61 sich nicht relativ zueinander verdrehen können. Diese Art der Verdrehsicherung kann bei allen Ausführungsformen des erfindungsgemäßen Filterelements, bei dem mehrere Filterscheiben 37, 39, 59 und 61 in Reihe hintereinander angeordnet werden, als Verdrehsicherung eingesetzt werden.

In vielen Anwendungsfällen hat es sich bei allen Ausführungsformen erfindungsgemäßer Filterelemente als vorteilhaft erwiesen, wenn ein Durchmesser D₁ der ersten Filterbohrungen 13 größer ist als ein Durchmesser D₂ der zweiten Filterbohrungen 19. Dadurch wird eine stufenweise Filterung, beginnend bei den größeren Partikeln, des zu filternden Kraftstoffs vorgenommen.

## Patentansprüche

1. Filterelement für eine Kraftstoffeinspritzanlage mit einer in eingebautem Zustand des Filterelements (1) stromaufwärts angeordneten ersten Sacklochbohrung (7), mit einer stromabwärts angeordneten zweiten Sacklochbohrung (9), mit einer Aussparung (11) an einem Außendurchmesser des Filterelements (1), **dadurch gekennzeichnet, dass** zwischen der ersten Sacklochbohrung (7) und der Aussparung (11) erste Filterbohrungen (13) vorhanden sind, und wobei zwischen der Aussparung (11) und der zweiten Sacklochbohrung (9) zweite Filterbohrungen (19) vorhanden sind.

2. Filterelement nach Anspruch 1, **dadurch gekennzeichnet, dass** ein in eingebautem Zustand des Filterelements (1) stromabwärts der Aussparung (11) angeordneter Abschnitt des Filterelements (1) als Führungsabschnitt (23) ausgebildet ist, und dass ein in eingebautem Zustand des Filterelements (1) stromaufwärts der Aussparung (11) angeordneter Dichtabschnitt (21) des Filterelements (1) einen Presssitz mit einer Aufnahmebohrung (3) für das Filterelement (1) bildet.

3. Filterelement nach einem der vorhergehenden Ansprüche, **dadurch gekennzeichnet, dass** die erste Sacklochbohrung (7) einen ersten Spänesammelraum (15) begrenzt.

4. Filterelement nach einem der vorhergehenden Ansprüche, **dadurch gekennzeichnet, dass** die Aussparung (11) und die Aufnahmebohrung (3) für das Filterelement (1) einen zweiten Spänesammelraum (17) begrenzen.

5. Filterelement nach einem der vorhergehenden Ansprüche, **dadurch gekennzeichnet, dass** ein Durchmesser (D1) der ersten Filterbohrungen (13) größer als ein Durchmesser (D2) der zweiten Filterbohrungen (19) ist.

6. Filterelement nach einem der vorhergehenden Ansprüche, **dadurch gekennzeichnet, dass** das Filterelement (1) eine rotationssymmetrische, bevorzugt eine zylindrische Außenkontur aufweist.

## Claims

1. Filter element for a fuel injection system, having a first blind bore (7) which is arranged upstream in an installed state of the filter element (1), having a second blind bore (9) which is arranged downstream, having a recess (11) on an outer diameter of the filter element (1), **characterized in that** first filter bores (13) are provided between the first blind bore (7) and the recess (11), and wherein second filter bores (19) are provided between the recess (11) and the second blind bore (9).

2. Filter element according to Claim 1, **characterized in that** a section of the filter element (1) arranged downstream of the recess (11) in the installed state of the filter element (1) is in the form of a guide section (23), and **in that** a sealing section (21) of the filter element (1) arranged upstream of the recess (11) in the installed state of the filter element (1) forms an interference fit with a receiving bore (3) for the filter element (1).

3. Filter element according to one of the preceding claims, **characterized in that** the first blind bore (7) delimits a first chip-collecting chamber (15).

4. Filter element according to one of the preceding claims, **characterized in that** the recess (11) and the receiving bore (3) for the filter element (1) delimit a second chip-collecting chamber (17).

5. Filter element according to one of the preceding claims, **characterized in that** a diameter (D1) of the first filter bores (13) is greater than a diameter (D2) of the second filter bores (19).

6. Filter element according to one of the preceding claims, **characterized in that** the filter element (1) has a rotationally symmetrical, preferably cylindrical outer contour.

## Revendications

1. Élément de filtre pour une installation d'injection de carburant comprenant un premier alésage borgne (7) disposé en amont dans l'état installé de l'élément de filtre (1), un deuxième alésage borgne (9) disposé en aval, avec un évidement (11) au niveau d'un diamètre extérieur de l'élément de filtre (1), **caractérisé en ce que** des premiers alésages de filtre (13) sont disposés entre le premier alésage borgne (7) et l'évidement (11), et des deuxièmes alésages de filtre (19) sont disposés entre l'évidement (11) et le deuxième alésage borgne (9).

2. Élément de filtre selon la revendication 1, **caractérisé en ce qu'**une portion de l'élément de filtre (1) disposée en aval de l'évidement (11) dans l'état installé de l'élément de filtre (1) est réalisée sous forme de portion de guidage (23), et **en ce qu'**une portion d'étanchéité (21) de l'élément de filtre (1) disposée en aval de l'évidement (11) dans l'état installé de l'élément de filtre (1) forme un ajustement serré avec un alésage de réception (3) pour l'élément de filtre (1).

3. Élément de filtre selon l'une quelconque des revendications précédentes, **caractérisé en ce que** le premier alésage borgne (7) délimite un premier espace de collecte de débris (15).

4. Élément de filtre selon l'une quelconque des revendications précédentes, **caractérisé en ce que** l'évidement (11) et l'alésage de réception (3) pour l'élément de filtre (1) délimitent un deuxième espace de collecte de débris (17).

5. Élément de filtre selon l'une quelconque des revendications précédentes, **caractérisé en ce qu'**un diamètre (D1) des premiers alésages de filtre (13) est supérieur à un diamètre (D2) des deuxièmes alésages de filtre (19).

6. Élément de filtre selon l'une quelconque des revendications précédentes, **caractérisé en ce que** l'élément de filtre (1) présente un contour extérieur à symétrie de révolution, de préférence cylindrique.
